(19) Europäisches Patentamt
European Patent Office
Office européen des brevets

(11) Publication number: **0 634 865 A1**

(12) # EUROPEAN PATENT APPLICATION

(21) Application number: **94420197.9**

(22) Date of filing: **11.07.94**

(51) Int. Cl.$^6$: **H04N 5/262,** G11B 27/00

(30) Priority: **14.07.93 US 92406**

(43) Date of publication of application: **18.01.95 Bulletin 95/03**

(84) Designated Contracting States: **DE FR GB**

(71) Applicant: **EASTMAN KODAK COMPANY**
**343 State Street**
**Rochester, New York 14650-2201 (US)**

(72) Inventor: **Funston, David L.**
**c/o Eastman Kodak Company,**
**343 State Street**
**Rochester, New York 14650-2201 (US)**

(74) Representative: **Boulard, Denis et al**
**Kodak-Pathé**
**Département Brevets**
**CRT-Zone Industrielle**
**F-71102 Chalon-sur-Saône Cédex (FR)**

(54) **Multi-player video presentation system.**

(57) The present system includes video compact disc players (10,12) daisy chained together. The players pass the output images from each player as well as commands from player to player. A single command input from a single source controls is passed down the chain to all players. The last player in the chain displays the selected and combined images on a single display (16). Image transitions such as fades and dissolves are performed using computer controlled attenuators and mixers signal. Blinds type transitions are accomplished by providing the computer with the player synchronization signals allowing the computer to appropriately control the attenuators and switches.

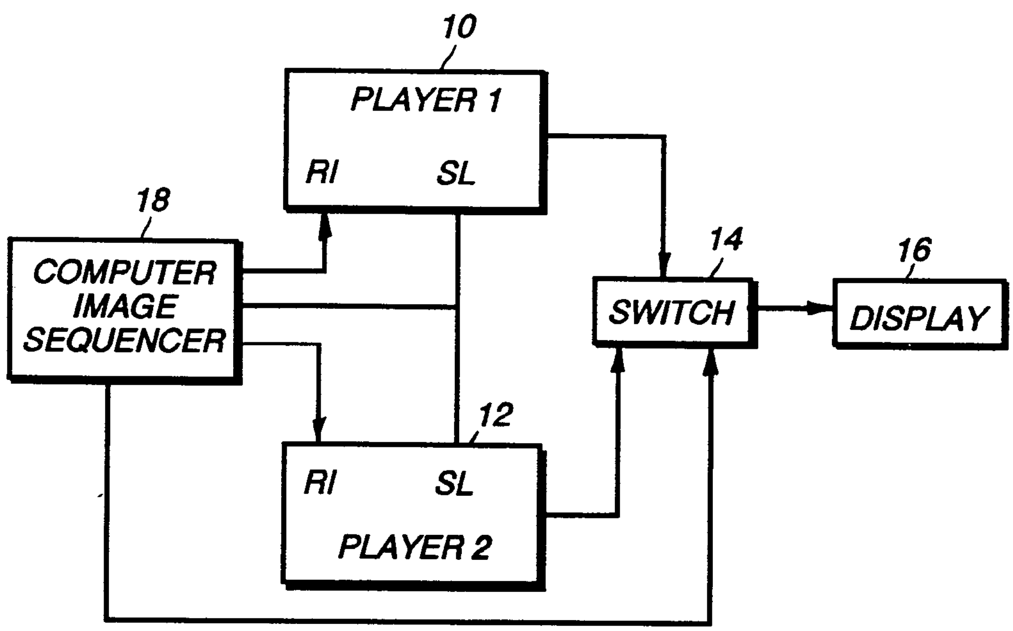


FIG. 1

EP 0 634 865 A1

## Field of the Invention

The present invention is directed to a compact disc video presentation system and, more particularly, to a system that daisy chains as many players as desired to a single display, controls transitions, such as fades, dissolves and blinds, between images produced by the players and controls image selection by each player.

## Description of the Related Art

Current audiovisual presentation systems using multiple disc based players provide a dedicated display for each player. That is, even though multiple images are being retrieved and output, the images are being retrieved and displayed in parallel and not on the same display. U.S. Patent 5,172,242 describes such a typical system. Such systems can be modified to allow the displays to be switched between images from different players, however, such systems require not only a switching mechanism but also the addition of memory type frame stores for each player. Such systems, because on/off switching is being performed, do not have the capability of performing more sophisticated image transitions such as fades, dissolves and blinds.

What is needed is a multiple disc player system that will provide sophisticated image transitions such as fades, dissolves and blinds without the need for additional memory, such as a frame store.

## Summary Of The Invention

It is an object of the present invention to perform fades, dissolves and blind type transitions as well as simply switch between images on a single display without the need for additional frame store type memory.

It is also an object of the present invention to provide a system that is controlled from a single access port.

It is a further object of the present invention to provide a system that uses commercially available players and simple interconnecting components.

The above objects can be accomplished by a system in which disc players are daisy chained together and pass the output images from each player as well as commands from player to player so that a single command input from a single source controls all players and displays the selected images on a single display. Image transitions such as fades and dissolves are performed using computer controlled attenuators and mixers which control the level of the signal provided by each player to the display. Blinds type transitions are accomplished by providing the computer with the player synchronization signals allowing the computer to control the attenuators fast enough to output a signal from one player to the display for only part of a display sweep and output from another one of the players for a different part of the same sweep.

These together with other objects and advantages which will be subsequently apparent, reside in the details of construction and operation as more fully hereinafter described and claimed, reference being had to the accompanying drawings forming a part hereof, wherein like numerals refer to like parts throughout.

## Brief Description Of The Drawings

Figure 1 depicts a first embodiment of the present invention;
Figure 2 illustrates a second embodiment of the present invention;
Figure 3 illustrates the second embodiment in greater detail;
Figure 4 depicts the details of the fade unit 62 of Figure 3;
Figure 5 shows the details of the fade unit 64 of Figure 3;
Figure 6 depicts the details of the mixer unit 68 of Figure 3;
Figure 7 illustrates the details of the controller microcomputer 66 of Figure 3;
Figure 8 is a flowchart of the basic operation of the controller microcomputer 66;
Figure 9 is a flowchart of the operation of the microcomputer 66 when executing commands; and
Figure 10 depicts a third embodiment of the present invention.

## Description Of The Preferred Embodiments

A first embodiment of the present invention, as illustrated in Figure 1 includes first and second compact video disc players, such as the Kodak Model PCD-870 capable of retrieving images from the Kodak Photo CD™ and working with S-VHS video (separate luminance and chrominance signals). Each of the players includes a synchronization lock input which when connected together allows the players to be genlocked together and, thus, operate in synchronism. That is, because of the sync lock the image outputs produced are in synchronism and can be combined by a conventional video switcher 14, thereby not requiring additional frame store type memory. The switch 14 outputs the selected image to a conventional display 16 responsive to a selection control provided by a conventional computer based image sequencer 18 which can be based on the Motorola 6805 microprocessor, for example. The computer 18 also controls which images are being output by the first and second players 10 and 12 by supplying image selection commands through the remote inputs RI provided in each player. The command signals for image selection of the images on the compact disc in each player can also be provided by a conventional infrared transmitter connected to the computer 18 or the computer can be hardwire connected to the player on the backside of the infrared detector circuit. The commands provided to the first and second players can therefore be conventional. The computer image sequencer 18 can itself be controlled by a conventional infrared input, or based on keyboard inputs or even further through a preprogrammed image sequence stored on a floppy disc coupled to the computer 18. A person of ordinary skill in the art familiar with the format of the commands for operation of the first 10 and second 12 players by remote control and familiar with the operation of a conventional commercial switcher 14 can provide the appropriate program for the computer 18 to perform image switching as previously discussed. When the synchronization lock signal is provided to the computer 18 it is possible for the computer sequencer to control the switch 14, so that the venetian blind type transitions between images provided by the first and second players can be provided. In such a situation the switch 14 would output the image from player 1 for a portion of a display sweep and output the image from the other player for another portion of the same sweep. A faster computer than the one mentioned above is necessary if vertical blinds rather than horizontal blinds are desired.

A second embodiment of the present invention with two modes is illustrated in Figure 2. The first mode daisy chains two compact video disc players together designating the highest player in the chain as the master player 30 and the subsequent player 32 in the chain as the slave player. In the first mode the daisy chain embodiment 28, illustrated in Figure 2, can be controlled by a conventional wired or infrared remote control unit 34. In the second mode of the embodiment 28 of Fig. 2 the control commands are provided directly to the player controllers via conventional RS 232 ports from a conventional personal computer 36, such as an IBM PC or Apple Macintosh.

When in the first mode the commands received by the master player 30 through the remote control input are intercepted and interpreted by the player controller 40. The master player controller determines whether the command is for the master player or for the slave player 32. If the command is directed at retrieving an image from within the master player 30 the player controller 40 formats an appropriate command and provides it to the master player 30 through the intercepted remote control input of the master player 30. If the command designates retrieval of an image by a slave player the player controller 40 passes the command through the daisy chain to the player controller 42 for the slave player 32. If the command is a transition command, such as a fade command, player controller 40 determines whether the output of the master player is to be involved in the transition and controls the luminance Y and chrominance C signals produced by the master player accordingly. If the transition command involves a slave player the player controller 40 passes the command to the slave player controller 42. The slave player controller 42 when involved in a transition with player controller 40 combines the signals from the slave player 32 and the player controller 40 to produce a single output for the display 44.

Commands over the RS-232 path are provided directly to the player controllers and the passing of commands from master to slave discussed above need not occur. In this second mode the player controller determines whether a command is addressed to it or the associated player and performs the functions as discussed above.

Figure 3 illustrates the components of the disc players 30/32 and the controllers 40/42 in more detail. The players 30 and 32 include a wired remote input line and a conventional infrared remote control input 50 which are intercepted and provided to the player controller 40/42. The remote input is also used for command inputs from the previous controller and can be used for command inputs from the computer 36. However, as mentioned previously the commands from computer 36 can be provided to the controller 40/42 directly from the computer 36. Image commands or calls are provided by the controller 40/42 to the player microcomputer 52 which controls retrieval and playing of the image by a video controller 53. The video signal for the image retrieved is encoded by encoder 54 and provided to the controller 40/42. The luminance signal has a synchronization signal imposed thereon. This signal is stripped off by a sync strip unit 60 and the luminance signal with synchronization removed along with the chrominance signal is provided to a first fade unit 62. If a player-controller pair exists higher in the chain than the controller 40/42 shown in Figure 3 the luminance and chrominance signals from the previous daisy chain stage are provided to a second fade unit 64. A controller microcomputer 66 based on a microcomputer such as the Motorola MC68HC05 or MC68HC05C8, is responsive to transition commands and controls the fader units 62 and 64 to output appropriate levels of the luminance Y and chrominance C signals from the connected player 30/32 and from the previous controller. The attenuation adjusted signals are provided to a mixer unit 68. The mixer unit 68 mixes the two signals and provides the signals as a single image signal to the next controller if a succeeding controller in the daisy chain stage exists or to the display 44.

Figure 4 illustrates the components of the A fade unit 62 of Figure 3 in more detail. The luminance Y signal from the encoder 54 is provided to an input buffer 80 which is connected to a conventional bidirectional switch 82, such as the CD4066 available from National Semiconductor. The bidirectional switch 82 passes the luminance signal to an attenuator 84 in response to a synchronization signal from controller 53. The attenuator, which is preferably an AD539 available from Analog Devices, under the control of the controller microcomputer 66 appropriately attenuates the luminance signal and provides it to another bidirectional switch 86. The bidirectional switch 86 responsive to a gate control signal from the controller microcomputer 66 outputs the luminance signal to a gain adjust circuit 87 and then to an output buffer 88 which transmits the signal to the mixer 68.

The chrominance signal from the encoder 54 is provided to an input buffer 90 and then to another attenuator 92 and which is also controlled by the controller microcomputer 66. Another bidirectional switch 94 receives the output of the attenuator 92 and, under the control of the gate signal from the microcomputer 66, provides the chrominance signal to a gain adjust circuit 96. The gain adjust circuit 96 outputs to the mixer 68 through an output buffer 98.

The vertical synchronization signal from the previous player is provided to an inverter which outputs to the microcomputer 66 and to an output buffer 102. The output buffer provides the signal to the video controller 53. The horizontal synchronization signal is delayed by monostable multivibrator 104 and regenerated by monostable multivibrator 106, both the 74HC221 available from National Semiconductor, before being provided to the controller microcomputer 66 and an output buffer 108. The output buffer 108 provides the horizontal synchronization signal to the video controller 53. The doubled subcarrier frequency from the previous player, if it exists, is provided to an inverter 110 which outputs the signal to the video controller 53. As illustrated in Figure 5, the B fade unit 64 includes a pair of identical attenuation circuits 120 and 122 one for the luminance signal and one for the chrominance signal. Since these circuits include components 124, 126, 128, 130, 132 and 134 which have been described previously with respect to Figure 4 a detailed description of the operation of this pair of circuits 120 and 122 is omitted for convenience and brevity.

The fade unit 64 also includes a subcarrier selection circuit 136. The subcarrier selection circuit 136 includes an inverter 138 which inverts the subcarrier from the video controller and supplies it to the video encoder 54 as well as to a second inverter 140. The inverter 140 provides the subcarrier signal to a switch 142 which is controlled by an output from an inverter 144 which receives a master/slave signal from a mode switch 146. The mode switch output is also provided to a switch 148. By controlling the switches 142 and 148 responsive to the master/slave status switch signal the circuit 136 selects and outputs the subcarrier signal from either the previous controller 40/42 or from the video controller 52.

Figure 6 illustrates the components of the mixer 68 in more detail. The luminance signals from the fade units 62 and 64 are provided to DC level adjust clamping circuits 160 and 162 for AC coupling and DC restoration which then output to corresponding buffers 164 and 166. The output of the buffers 166 and 164 is combined and provided to a gain adjust and high frequency amplifier 168. The circuit 168 boosts the high frequency portion of the luminance signal to correct for high frequency signal losses which occur in the preceding luminance signal circuits. The output of the circuit 168 is provided to a DC level adjust circuit 170 and then to either a phase inverter 172 or a synchronization level adjust circuit 174. The outputs of these two circuits are provided to output buffers 176 and 178 and thereon either to the display 44 if this is the last controller in the daisy chain or to the next controller if not.

The mixer 68 combines the chrominance signals from the fade unit 62 and 64 by first buffering the signals using input buffers 180 and 182, combining the buffer output signals and providing the combined signal to a gain adjustment circuit 184. The output of the gain adjustment circuit 168 is provided to an output buffer 186 and then to the display if it exists and the next controller.

As previously mentioned the controller microcomputer 66 is based on a Motorola 68HC05C8 microcomputer 200, as illustrated in Figure 7. The microcomputer 200 receives inputs from the previous controller, or a remote control or from the computer 36. The microcomputer 200 also receives signals from mode switches 202, which includes the master slave mode switch previously mentioned as well as switches which designate the address or identification of the slave controller. The computer also receives the horizontal and vertical signals from monostable multivibrator 106 and buffer 100. The microcomputer 200 responsive to the input signals and under the control of a control program, to be discussed later herein, produces control signals which are provided to the fader units 62 and 64, and produces a remote control signal which is buffered by buffer 204 and is provided to the next or succeeding controller if one exists. The microcomputer also outputs digital fade control signals for the fade units to resistor latter type digital to analog converters 206 and 208. The outputs of the converts 206 and 208 are provided to level matching circuits 210 and 212 and the level adjusted fader control signals are provided to the attenuators previously mentioned. The most significant bit for each fader channel controls the corresponding bidirectional switches.

As illustrated in Figure 8 when a player controller 40/42 is powered up the controller microcomputer 230 reads the mode status switches 202 and determines 232 whether the RS-232 input is the active command control input and if so begins monitoring 234 and executing commands received by that input. If the RS232 input is not the active command input the system determines 236 whether the player controller 40/42 has been designated as a master or a slave. If designated a master the system looks at the infrared remote control commands and may send commands to the slave or the system monitors 240 the remote control input, decodes incoming commands, determines whether those commands are slave commands and routes the commands to the appropriate destination. If the commands are transition commands the player controller executes those commands appropriately. If image commands appropriate commands are provided to the corresponding player. If the player controller 40/42 is a slave player controller the system monitors 240 the input from the previous controller, performs appropriate transitions and image calls as commanded or passes the slave command onto the next player controller.

During the execution of image commands or transition commands as illustrated in Figure 9 the controller microcomputer 66 waits for a command addressed to this particular player controller 40/42. When the command is a new image command the system determines 254 whether the desired image is already active essentially making sure that a new image is not read into a frame store which is actively displaying the system image. If the image requested is not already active the system formats a command for the player microcomputer 52 and sends 256 the fetch command for the new image to the player microcomputer 52. The system then waits 258 for a transition command. If the command is determined 260 to be a transition command the microcomputer 66 controls the fade units 62 and 64 appropriately to make 262 the transition.

The command structure is preferably broken down into three types of commands. RS232 based commands, bus commands where only two players are connected in the daisy chain series and the command is received through the remote control input and infrared remote control commands. An RS-232 type command which is used when more than two players are daisy chained preferably includes a player number field, an image number field, a field for indicating whether a switch is to be performed, a field for indicating a transition time, a variable field that indicates how many multiples of the transition time should be used to control the transition, a blind type transition field, a field for indicating fade to black as well as a field for indicating a fade from black to the image. The bus type command preferably includes a field for indicating the next image, a field for indicating the previous image, a pair of fields for enabling slave and master image dissolves, a pair of fields for enabling slave and master image blinds, a pair of fields for indicating fading of the slave and master to black, a pair of fields for indicating fading the master and slave up to the image from black as well as a field for setting the fade time. The infrared remote control commands preferably include a next image field, a previous image field, an autoplay field allowing the players to play in alternating sequence a list of images with predetermined transition and display time intervals, a fade transition field, a dissolve transition field, a blinds transition field, a pause field and a set transition time.

A "fade-down" operation and a dissolve operation are the same from an operational point of view. For example, when a fade-down by one of the fade units is commanded, the amplitude of the signals produced by the corresponding attenuators is linearly ramped from full on to full off with the result of fading from a picture to a black screen in a smooth fashion. A "fade-up" is just the opposite. A dissolve is a fade up by one unit overlapped by a fade down by the other unit. As a result in the middle of the dissolve operation equal parts of the signals for two images are being provided to the display. A "blind down" operation is a progressive blackening of portions of the screen. For example, at the start of a horizontal blind-down in the first display cycle every 32nd horizontal line of the screen (that is, lines 1, 33, 65,...,481) are made black by closing the appropriate switches for a single line sweep. In the second display cycle pairs of lines are made black (that is, lines 1, 2, 33, 34, 65, 66, ..., 481, 482). In the third sweep three lines at a time are made black (that is, lines 1, 2, 3, 33, 34, 35, 65, 66, 67, ..., 481, 482, 483). The number of lines in each cycle made black increases until the entire screen is black. A blind up is just the opposite.

Figure 10 depicts a further embodiment of the present invention in which a computer 278 using a CD ROM drive 280 to control not only daisy chained players 282, 284, 286, 288 and 290 coupled to a single display 292 but also an audio compact disc player 294 and an amplifier 296 to produce audio through speakers 298 and 300 accompanying the images being displayed.

The many features and advantages of the invention are apparent from the detailed specification and, thus, it is intended by the appended claims to cover all such features and advantages of the invention which fall within the true spirit and scope of the invention. For example, signal formats other than S-VHS can be used. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

Parts List

| | |
|---|---|
| 10, 12 | Video Disk Player |
| 14 | Video Switch |
| 16 | CRT Display |
| 18 | Computer Image Sequencer |
| 30 | Master Video Disk Player |
| 32 | Slave Video Disk Player |
| 34 | Remote Control Unit |
| 36 | Computer |
| 38 | Remote Input |
| 40, 42 | Player Controller |
| 44 | Display |
| 50 | Light Detector |
| 52 | Player Microcomputer |
| 53 | Video Controller |
| 54 | Encoder |
| 60 | Sync Strip Unit |
| 62, 64 | Fade Unit |
| 66 | Controller Microcomputer |
| 68 | Mixer |
| 80, 88, 90, 98, 102, 108, 126, 134, 164, 166, 176, 178, 180, 182, 186, 204 | Buffer |
| 82, 86, 94, 130, 142, 148 | Bidirectional Switch |
| 84, 92, 128 | Attenuator |
| 87, 96, 124, 132, 184 | Gain Adjust Circuit |
| 100, 110, 138, 140, 144 | Inverter |

Parts List Cont'd

| | |
|---|---|
| 104, 106 | Multivibrator |
| 146 | Mode Switch |
| 160, 162 | DC Level Circuit |
| 168 | Gain Adjust & High Frequency Amp. |
| 170 | DC Level Adjust Circuit |
| 172 | Phase Inverter |
| 174 | Sync Level Adjust |
| 200 | uC |
| 202 | Mode Switches |
| 206, 208 | D/A Converter |
| 210, 212 | Level Matching Circuit |
| 230-262 | Operation Steps |
| 278 | Computer |
| 280 | CD ROM Storage |
| 282, 284, 286, | |
| 290 | Video Disk Player |
| 292 | Display |
| 294 | Audio Disk Player |
| 296 | Amplifier |
| 298, 300 | Speaker |

## Claims

1. A video presentation system, comprising:
   means (18) for controlling selection of and transitions between images;
   a display (16) for displaying an image responsive to the single image signal; and
   at least two daisy chained video compact disc players (10, 12) connected between said means (18) for controlling and said display (16), retrieving and combining at least two images into the single image signal.

2. A video presentation system, comprising:
   means (36) for commanding selection of and transitions between images;
   a first video disc player (30) storing and playing images on command;
   a first player controller (40) coupled to said means for commanding and to said first video disc player, receiving image selection and transition commands, commanding said first video disc player to play an image and performing image transitions and producing an output image;
   a second video disc player (32) storing and playing images on command;
   a second player controller (42) connected to said first player controller (40) and said second video disc player (32) , commanding said second video disc player to play an image and performing transitions on the images from said first player controller and said second video disc player producing a display output; and
   a display (44) displaying the display output.

3. A system as recited in claim 2, wherein said second player controller comprises:
a computer (66) receiving, decoding and executing commands from said command means;
a first fade unit (62) connected to said computer and said first player controller;
a second fade unit (64) connected to said computer and said second video disc player; and
a mixer unit (68) connected to said first and second fade units.

4. A system as recited in claim 3, wherein said second fade unit comprises series connected and computer controlled attenuators (128) and bidirectional switches (130).

5. A system as recited in claim 4, wherein said second player controller further comprises means for designating said second player controller as a one of a master and a slave unit.

6. A system as recited in claim 2, further comprising an audio system (294) commanded by said command means (278).

7. A video presentation system, comprising:
a first compact video disc video player (30) having a remote control input (38) and an image output producing a first image and a synchronization signal;
a second compact video disc player (32) having a synchronization lock input receiving the synchronization signal of said first compact video disc player, a remote control input and image output producing a second image;
a computer (36) coupled to the remote control input of and controlling selection of images output by said first and second compact video disc players, and producing a player selection signal;
a video signal switch (14) connected to said computer and to the outputs of said first and second compact video disc players and outputting one of the first and second images responsive to the player selection signal; and
a video display (16) connected to said switcher.

8. A multi-player video presentation system, comprising:
a single display (16) ;
at least two video players (30, 32) connected in a master slave configuration to said display; and
control means (18, 36) for activating each of the video players to cyclically play stored images through said display.

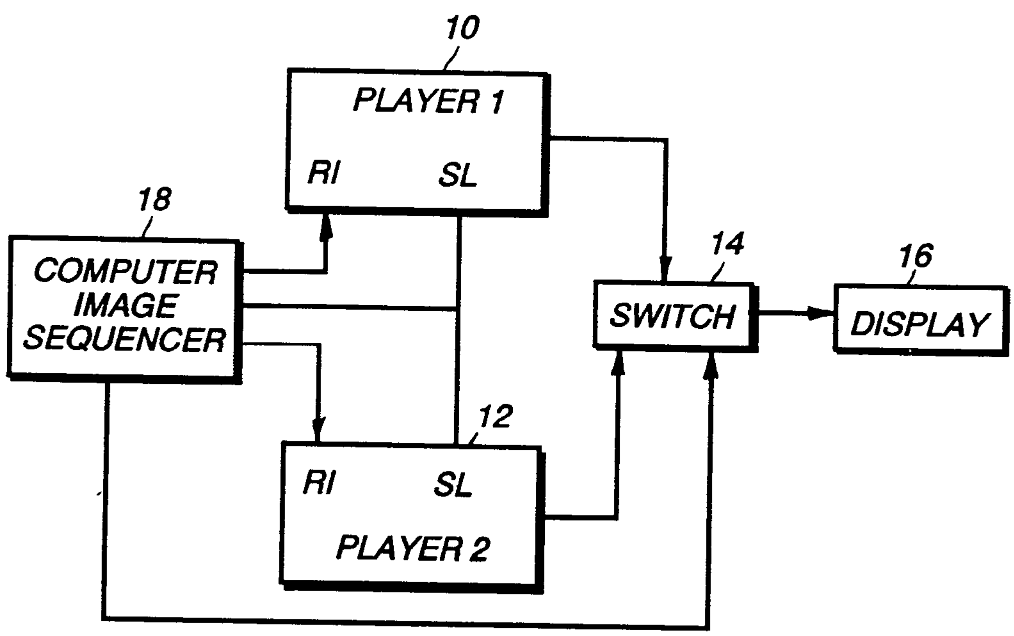
10
PLAYER 1
RI
SL
18
COMPUTER
IMAGE
SEQUENCER
14
SWITCH
16
DISPLAY
12
RI
SL
PLAYER 2

FIG. 1

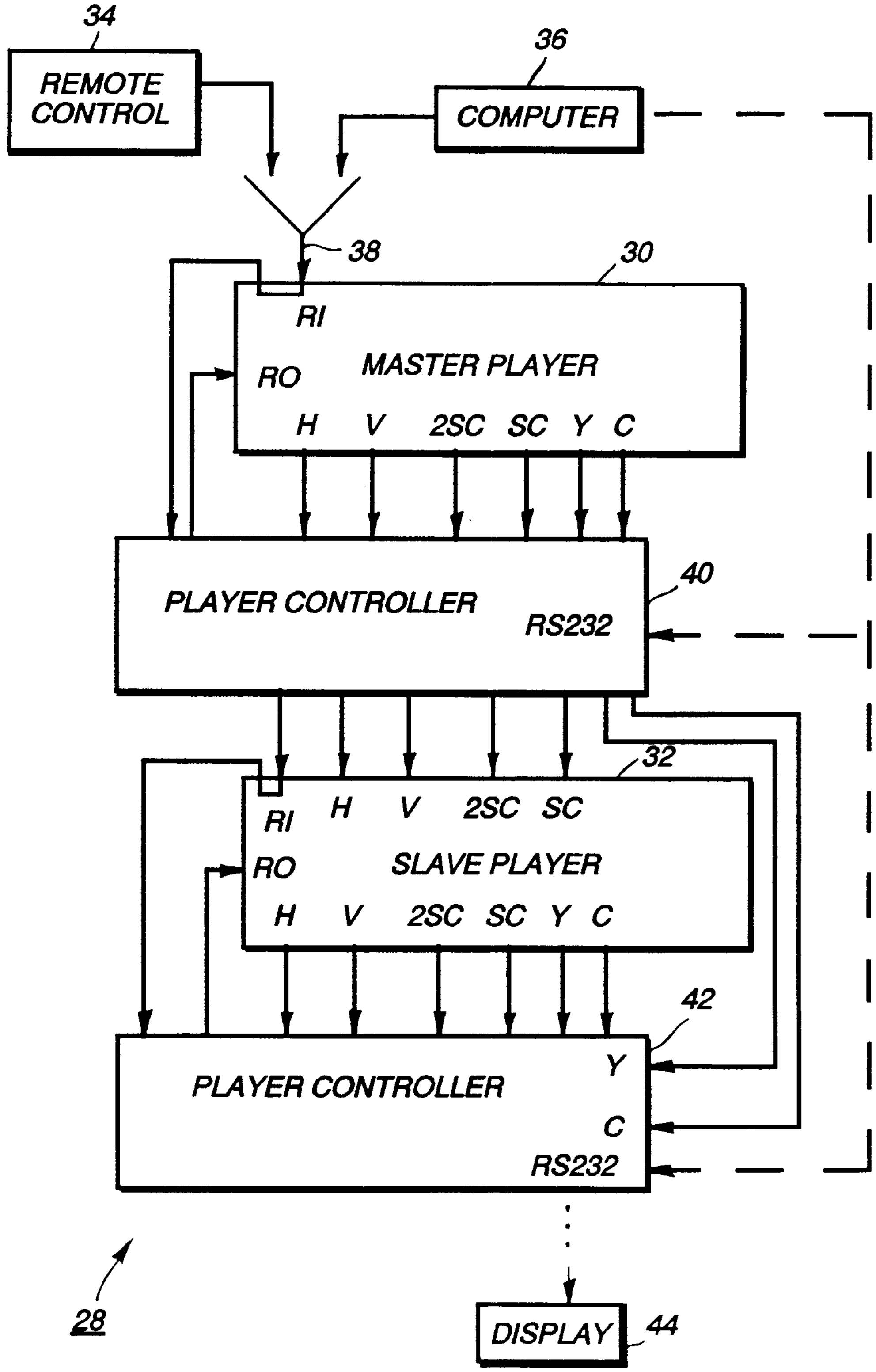
34
REMOTE CONTROL
36
COMPUTER
38
30
RI
RO
MASTER PLAYER
H V 2SC SC Y C
PLAYER CONTROLLER
40
RS232
32
RI
H V 2SC SC
RO
SLAVE PLAYER
H V 2SC SC Y C
42
PLAYER CONTROLLER
Y
C
RS232
28
DISPLAY
44

FIG. 2

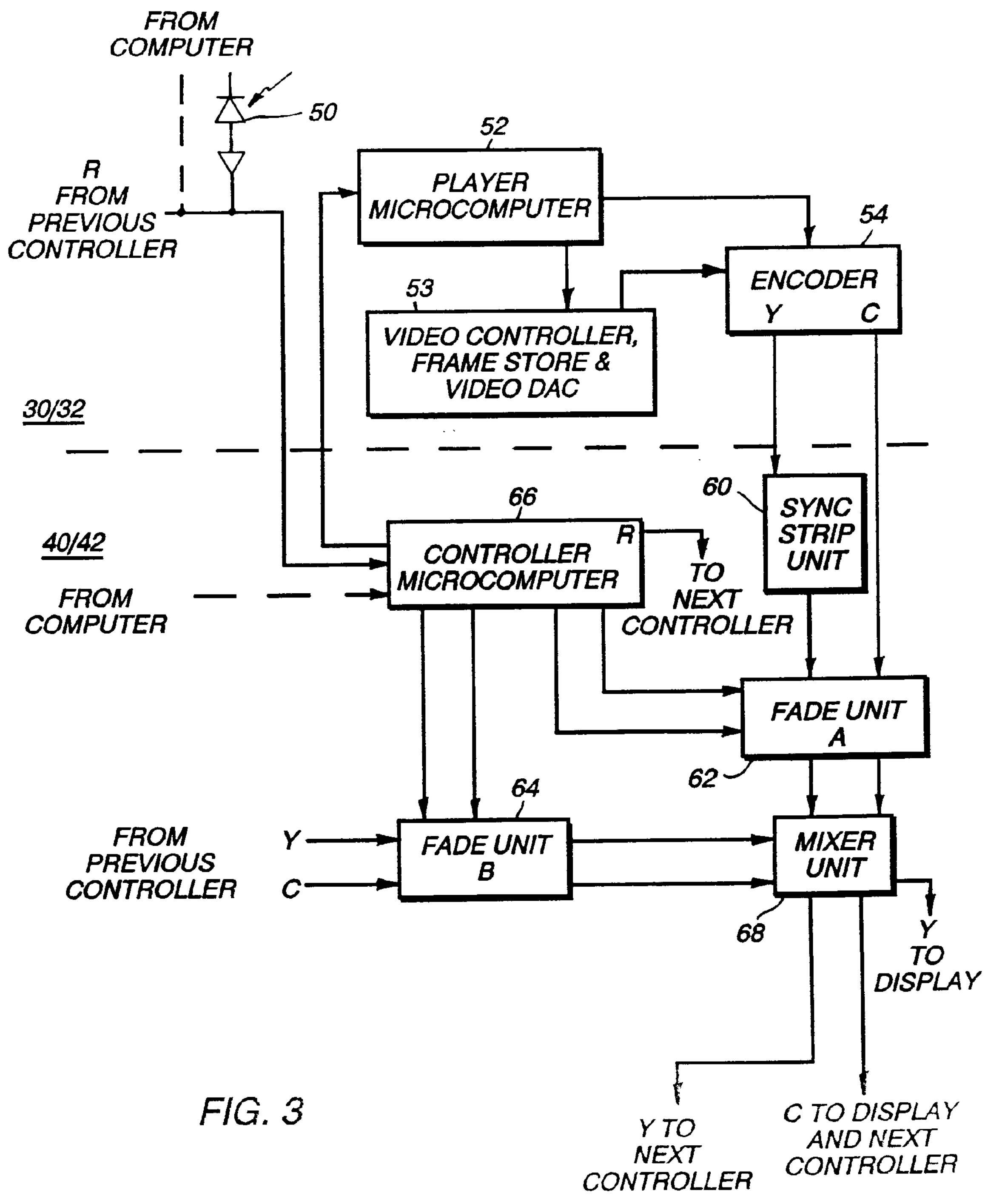
FROM
COMPUTER
50
52
R
FROM
PREVIOUS
CONTROLLER
PLAYER
MICROCOMPUTER
54
ENCODER
Y C
53
VIDEO CONTROLLER,
FRAME STORE &
VIDEO DAC
30/32
60
SYNC
STRIP
UNIT
66
R
CONTROLLER
MICROCOMPUTER
40/42
TO
NEXT
CONTROLLER
FROM
COMPUTER
FADE UNIT
A
62
64
FROM
PREVIOUS
CONTROLLER
Y
C
FADE UNIT
B
MIXER
UNIT
68
Y
TO
DISPLAY
Y TO
NEXT
CONTROLLER
C TO DISPLAY
AND NEXT
CONTROLLER

FIG. 3

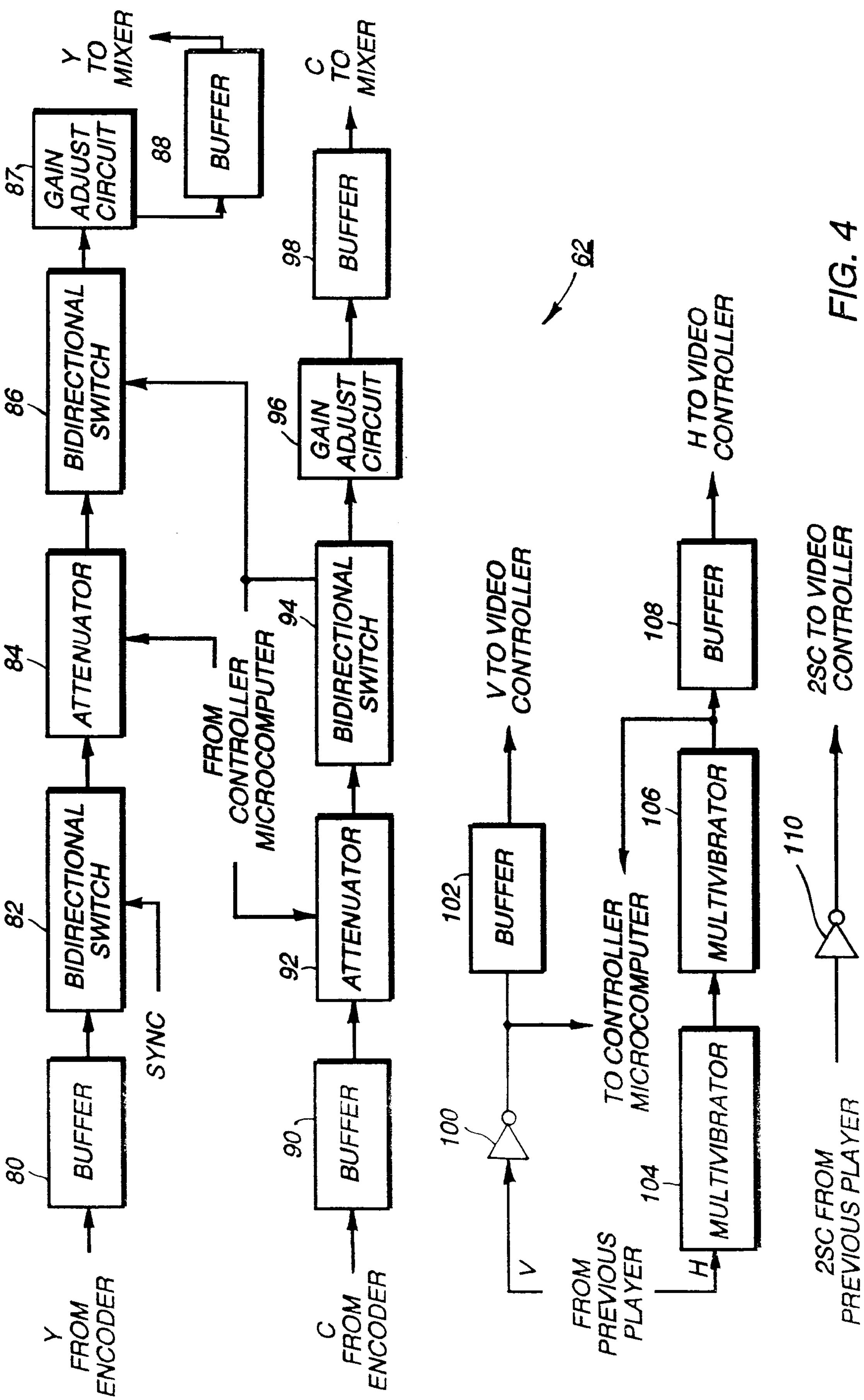
Y FROM ENCODER
BUFFER
80
BIDIRECTIONAL SWITCH
82
SYNC
ATTENUATOR
84
BIDIRECTIONAL SWITCH
86
GAIN ADJUST CIRCUIT
87
88
BUFFER
Y TO MIXER
FROM CONTROLLER MICROCOMPUTER
C FROM ENCODER
BUFFER
90
ATTENUATOR
92
BIDIRECTIONAL SWITCH
94
GAIN ADJUST CIRCUIT
96
BUFFER
98
C TO MIXER
62
V
100
TO CONTROLLER MICROCOMPUTER
BUFFER
102
V TO VIDEO CONTROLLER
FROM PREVIOUS PLAYER
H
MULTIVIBRATOR
104
MULTIVIBRATOR
106
BUFFER
108
H TO VIDEO CONTROLLER
2SC FROM PREVIOUS PLAYER
110
2SC TO VIDEO CONTROLLER

FIG. 4

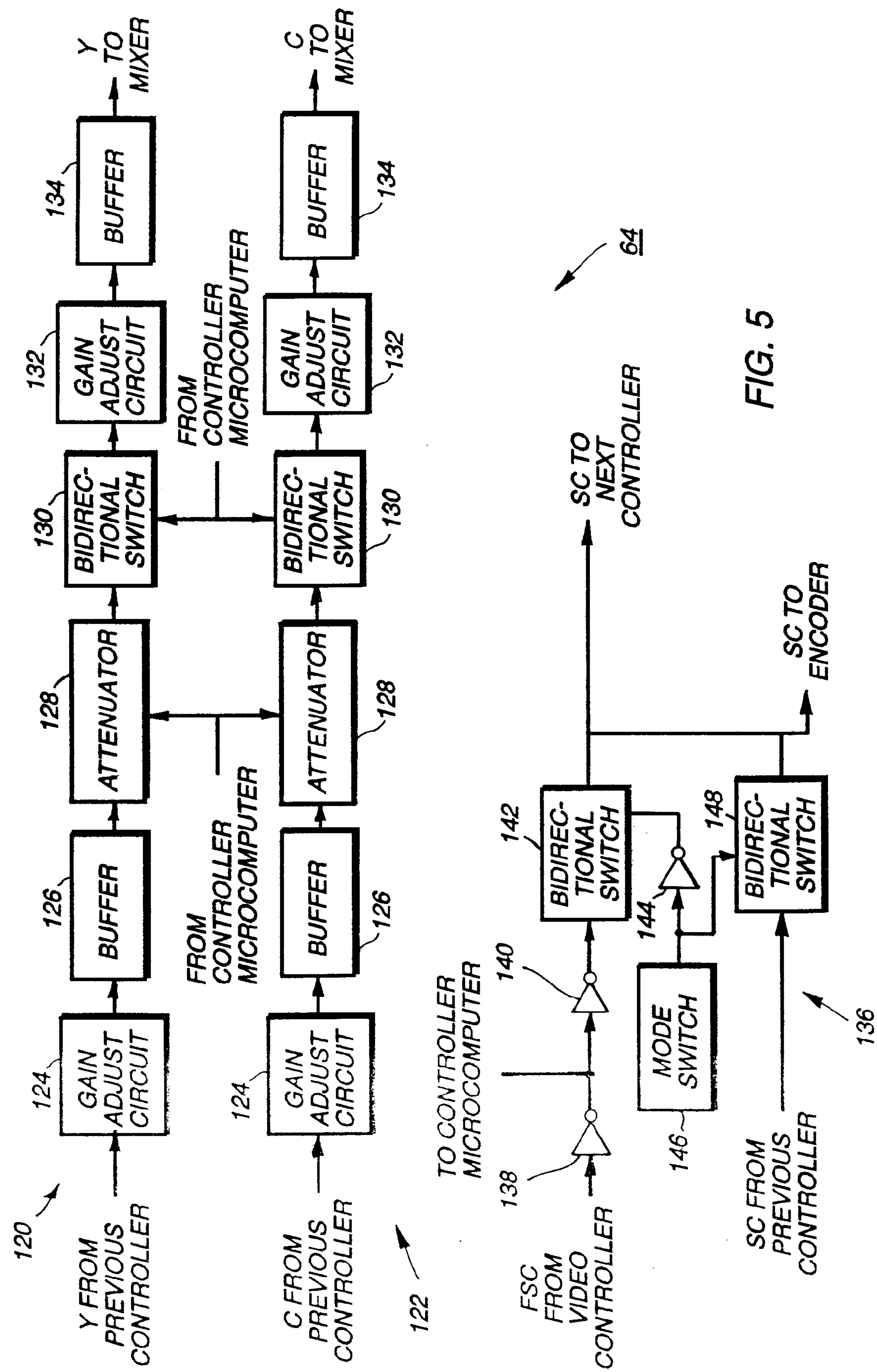
Y FROM PREVIOUS CONTROLLER
120
124
GAIN ADJUST CIRCUIT
126
BUFFER
128
ATTENUATOR
130
BIDIREC-TIONAL SWITCH
132
GAIN ADJUST CIRCUIT
134
BUFFER
Y TO MIXER
C FROM PREVIOUS CONTROLLER
122
C TO MIXER
FROM CONTROLLER MICROCOMPUTER
FSC FROM VIDEO CONTROLLER
138
TO CONTROLLER MICROCOMPUTER
140
142
144
MODE SWITCH
146
148
136
SC FROM PREVIOUS CONTROLLER
SC TO NEXT CONTROLLER
SC TO ENCODER
64

FIG. 5

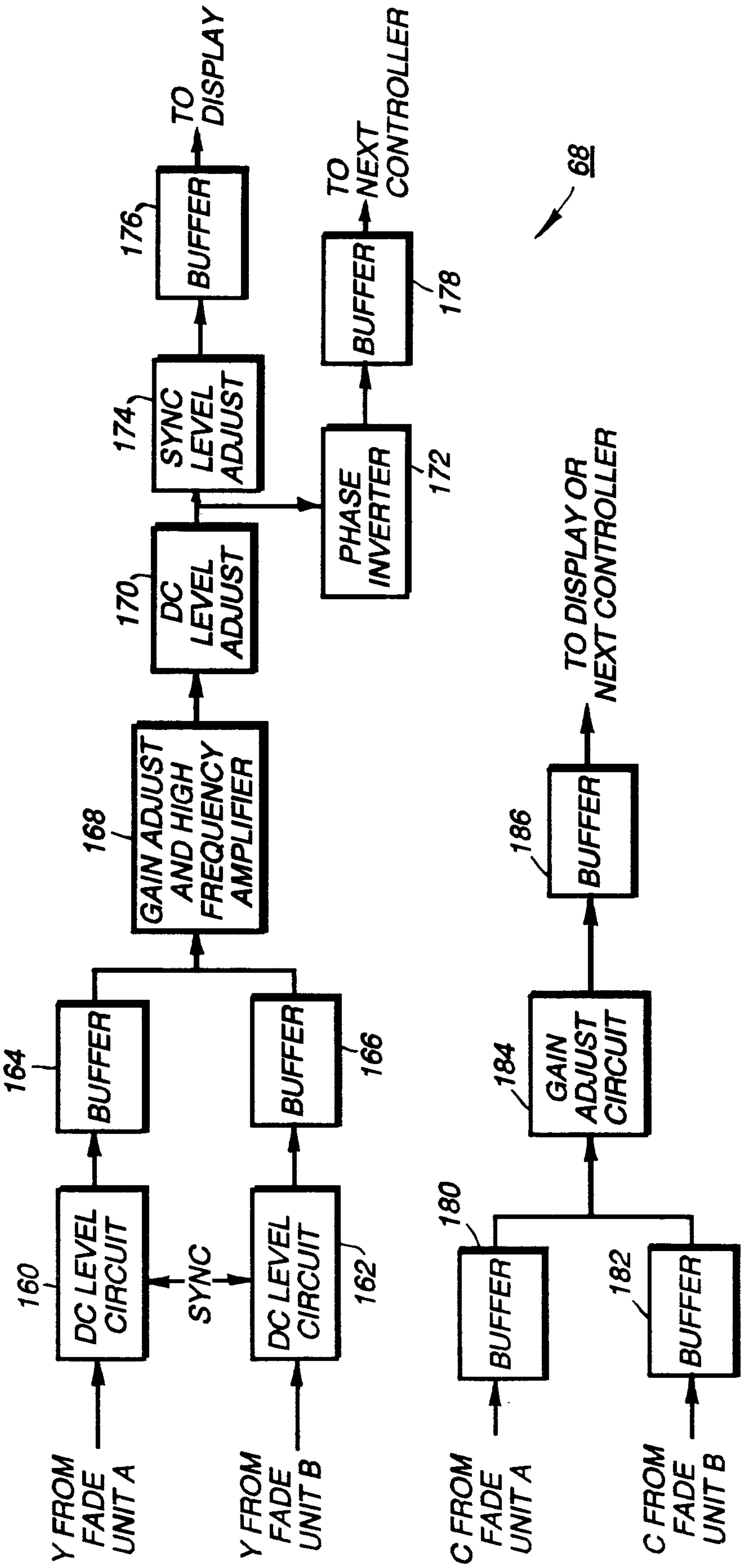

Y FROM FADE UNIT A
Y FROM FADE UNIT B
C FROM FADE UNIT A
C FROM FADE UNIT B
160
DC LEVEL CIRCUIT
SYNC
DC LEVEL CIRCUIT
162
164
BUFFER
BUFFER
166
168
GAIN ADJUST AND HIGH FREQUENCY AMPLIFIER
170
DC LEVEL ADJUST
174
SYNC LEVEL ADJUST
176
BUFFER
TO DISPLAY
PHASE INVERTER
172
BUFFER
178
TO NEXT CONTROLLER
68
180
BUFFER
182
BUFFER
184
GAIN ADJUST CIRCUIT
186
BUFFER
TO DISPLAY OR NEXT CONTROLLER


FIG. 6

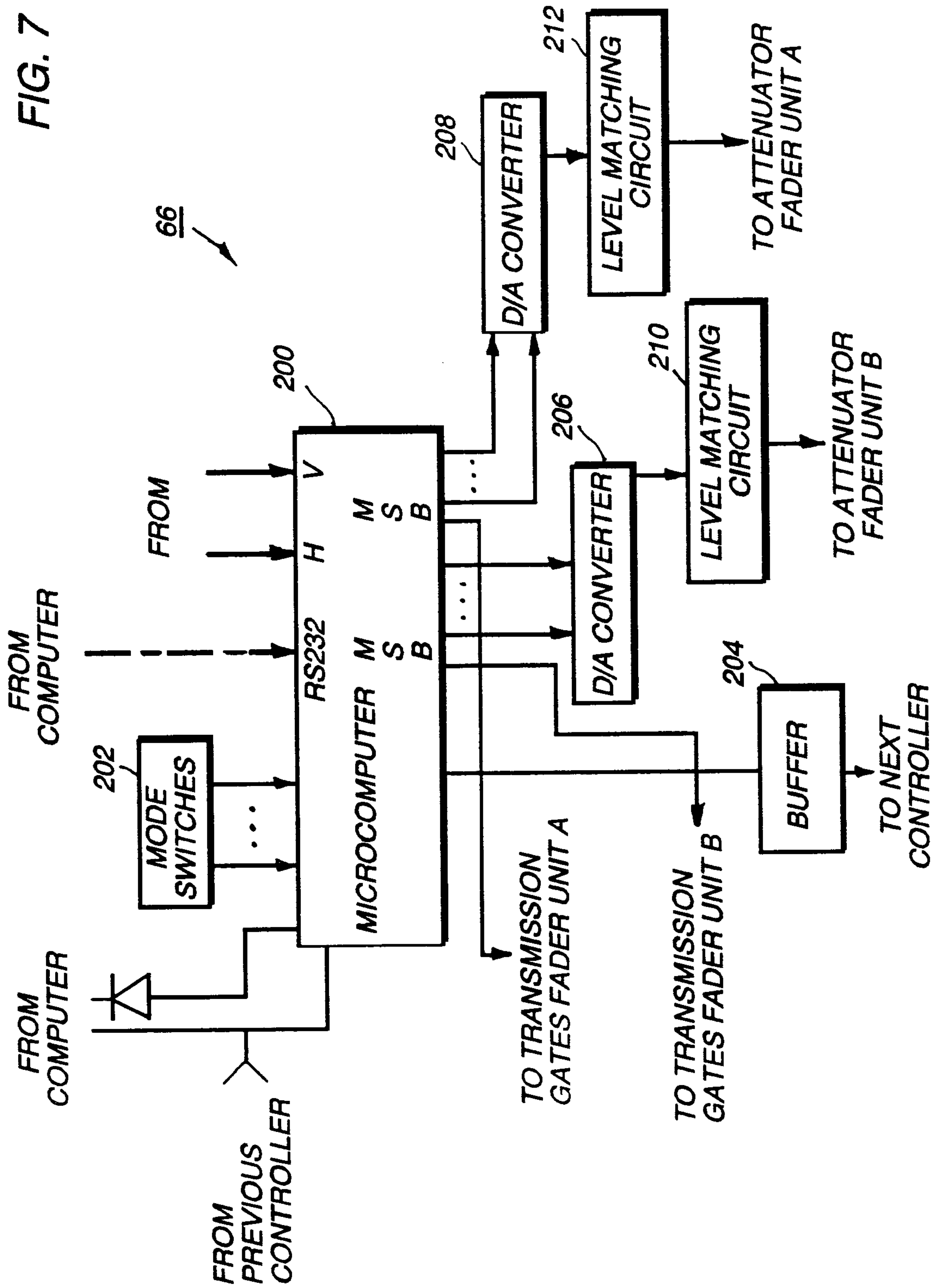
66
FROM COMPUTER
FROM PREVIOUS CONTROLLER
202
MODE SWITCHES
FROM COMPUTER
RS232
MICROCOMPUTER
FROM
H
V
200
M S B
M S B
TO TRANSMISSION GATES FADER UNIT A
TO TRANSMISSION GATES FADER UNIT B
204
BUFFER
TO NEXT CONTROLLER
206
D/A CONVERTER
210
LEVEL MATCHING CIRCUIT
TO ATTENUATOR FADER UNIT B
208
D/A CONVERTER
212
LEVEL MATCHING CIRCUIT
TO ATTENUATOR FADER UNIT A

FIG. 7

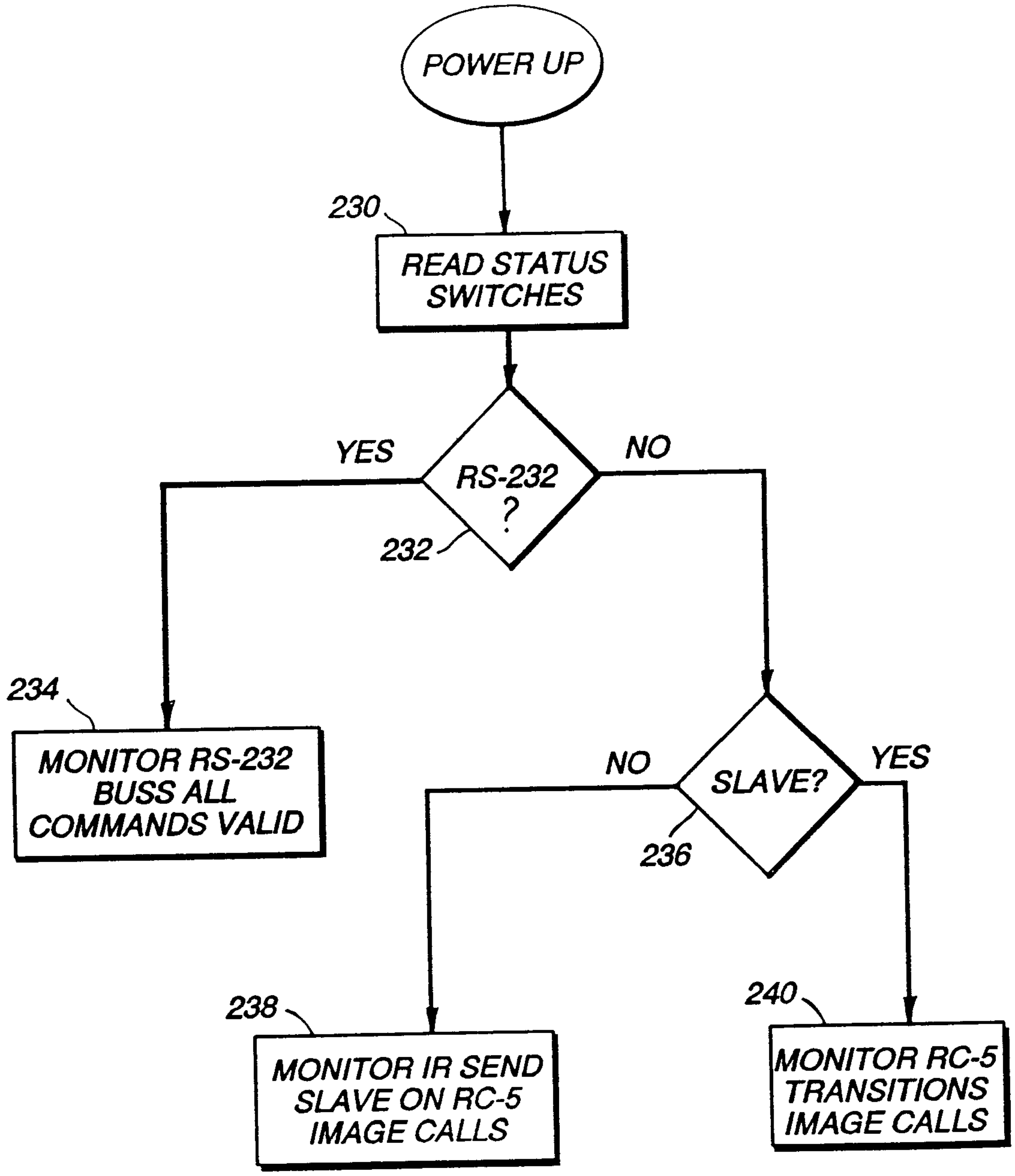
POWER UP
230
READ STATUS SWITCHES
RS-232 ?
232
YES
NO
234
MONITOR RS-232 BUSS ALL COMMANDS VALID
SLAVE?
236
NO
YES
238
MONITOR IR SEND SLAVE ON RC-5 IMAGE CALLS
240
MONITOR RC-5 TRANSITIONS IMAGE CALLS

FIG. 8

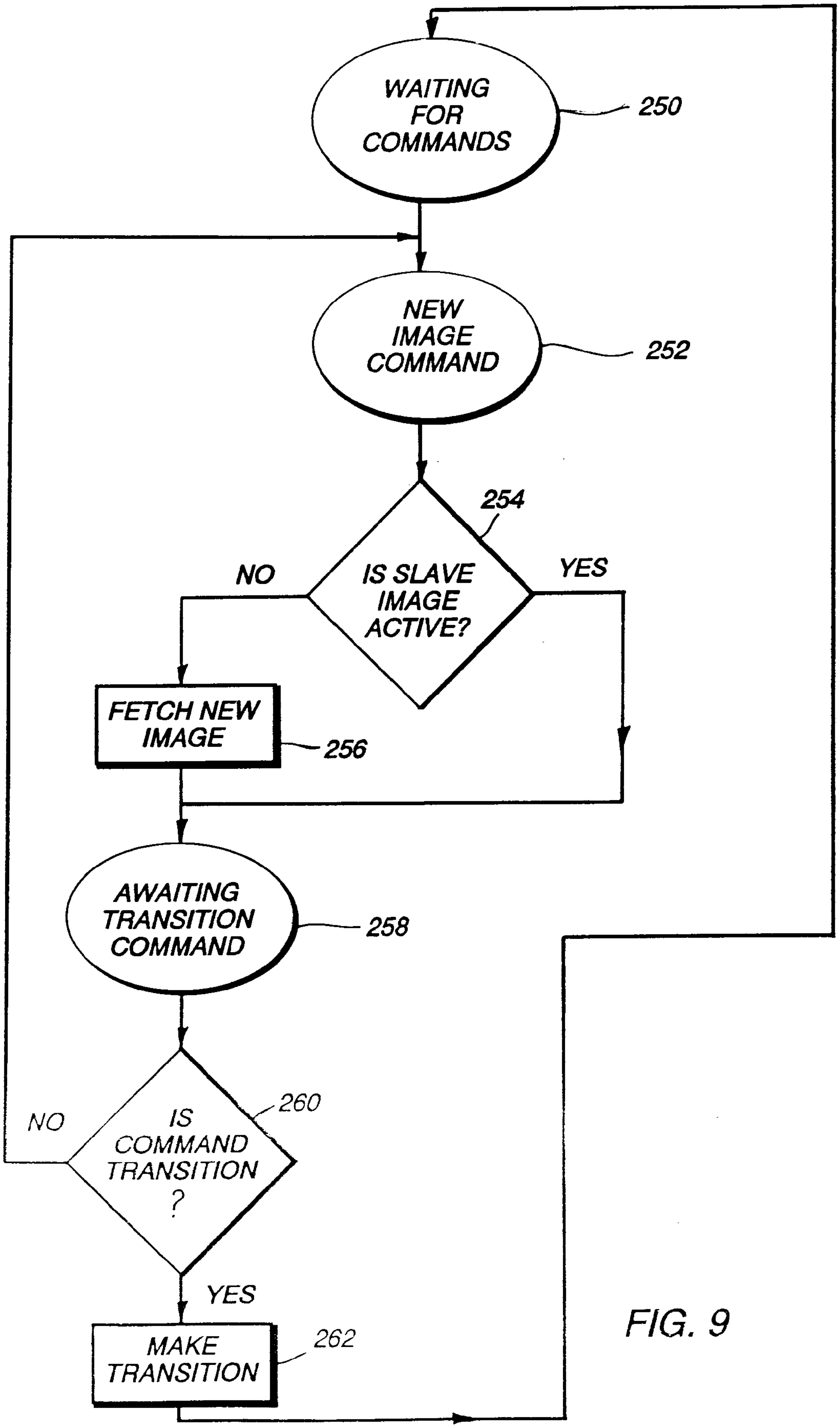
WAITING FOR COMMANDS
250
NEW IMAGE COMMAND
252
254
NO
IS SLAVE IMAGE ACTIVE?
YES
FETCH NEW IMAGE
256
AWAITING TRANSITION COMMAND
258
260
NO
IS COMMAND TRANSITION ?
YES
MAKE TRANSITION
262

FIG. 9

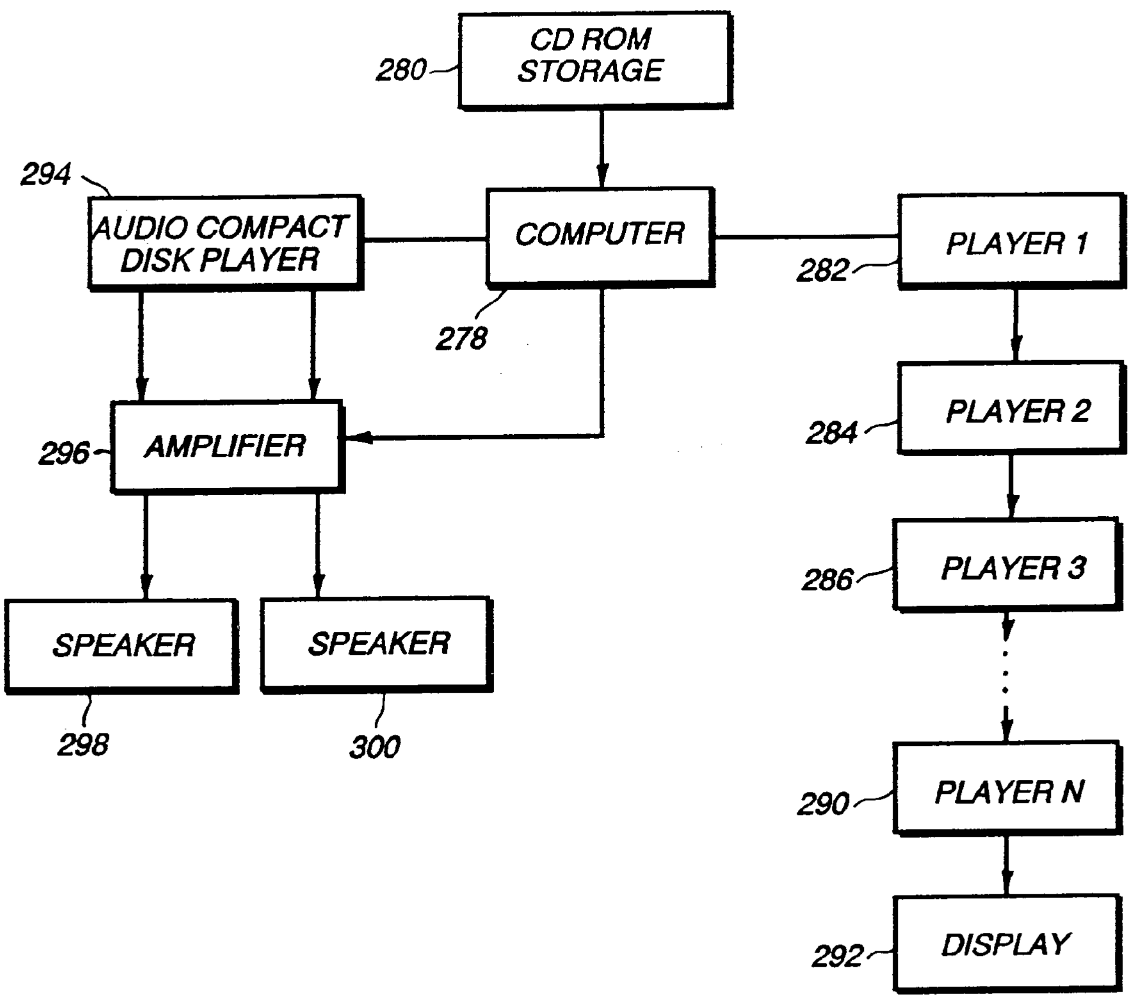
CD ROM STORAGE
280
294
AUDIO COMPACT DISK PLAYER
COMPUTER
PLAYER 1
282
278
PLAYER 2
284
296
AMPLIFIER
PLAYER 3
286
SPEAKER
SPEAKER
298
300
PLAYER N
290
DISPLAY
292

FIG. 10

European Patent Office

# EUROPEAN SEARCH REPORT

Application Number
EP 94 42 0197

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 084 768 (MICHAEL R. STERN)<br>* claims 1-6; figure 8 * | 1,2,7 | H04N5/262<br>G11B27/00 |
| A | GB-A-2 152 321 (TRANSIMAGE INTERNATIONAL LTD)<br>* page 1 *<br>* column 3, line 67 - line 71; claims 1,2; figures 1,2,6,7 * | 2-4,7 | |
| A | GB-A-1 260 568 (CENTRAL DYNAMICS LTD)<br>* claims 1-8; figures 3-5 * | 3,8 | |
| A | DE-A-41 14 440 (BTS GMBH)<br>* claims 1-3; figures 1,5 * | 1 | |
| A | EP-A-0 191 473 (BLOCK)<br>* claims 21,22; figure 1 * | 1,7 | |
| D,A | US-A-5 172 242 (YAMAGUCHI ET AL.)<br>* claim 1; figure 1 * | 1,2,7 | TECHNICAL FIELDS SEARCHED (Int.Cl.6) |
| A | EP-A-0 338 957 (FALCK)<br>* claims 1,4; figures 1,2 * | 1,2,7 | G11B<br>H04N |

The present search report has been drawn up for all claims

| Place of search | Date of completion of the search | Examiner |
|---|---|---|
| BERLIN | 17 October 1994 | Bernas, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)